# EUROPEAN PATENT SPECIFICATION

(11) **EP 0 850 790 B1**
(45) Date of publication and mention of the grant of the patent: **09.04.2003**
(21) Application number: 97122486.0
(22) Date of filing: 19.12.1997
(51) Int. Cl.: B60G 15/06

(54) **Suspension device for a motor vehicle**
Aufhängungsvorrichtung für ein Kraftfahrzeug
Dispositif de suspension pour un véhicule automobile.

(30) Priority: 23.12.1996 IT TO961071
(43) Date of publication of application: 01.07.1998
(73) Proprietor: FIAT AUTO S.p.A., 10135 Torino (IT)
(72) Inventor: Delsedime, Sergio, 10126 Torino (IT); Salmoria, Valter, 10135 Torino (IT)
(74) Representative: Quinterno, Giuseppe

(56) References cited:
- EP-A- 0 450 576
- DE-A- 2 935 610
- DE-A- 4 137 447
- FR-A- 2 369 942
- FR-A- 2 549 175
- GB-A- 2 143 300
- US-A- 5 000 429

## Description

The present invention relates to a suspension device for a motor vehicle of the type comprising
a shock absorber with a cylinder and a shaft which projects from the top of the cylinder and has a threaded upper spigot,
a spring located around the shock absorber between an upper plate which surrounds the upper end of the shaft and a lower plate,
a thrust bearing including a plurality of balls between a lower ring arranged around the shaft above the upper plate and an upper ring which bears on an upper shoulder of the shaft,
a threaded clamp member screwed onto the spigot of the shaft to clamp the upper ring of the bearing against the shoulder,
an annular buffer of resilient material located around the shaft above the upper ring of the bearing and including a rigid, annular, lower reinforcement and a rigid upper reinforcement; the buffer being intended to be introduced from beneath into a domed receptacle of the motor-vehicle body having an upper aperture; and
a stop member for connection to the spigot of the shaft over the clamp member and over the domed receptacle of the motor-vehicle body.

Such a suspension device, corresponding to the preamble of claim 1 is known from EP-A-0 450 576 and from DE-A-4 137 447.

The object of the present invention is to provide a suspension device of this type which has a smaller number of parts and is easily pre-assembled before its fitting to the motor vehicle.

This and other objects are achieved according to the invention by a suspension device of the type specified above, characterised in that the clamp member has an integral, radially-projecting formation which, in the clamped condition of the member, bears on the annular buffer so as to fix it to the bearing whereby this member enables both the bearing and the resilient buffer to be clamped simultaneously to the shaft of the shock absorber.

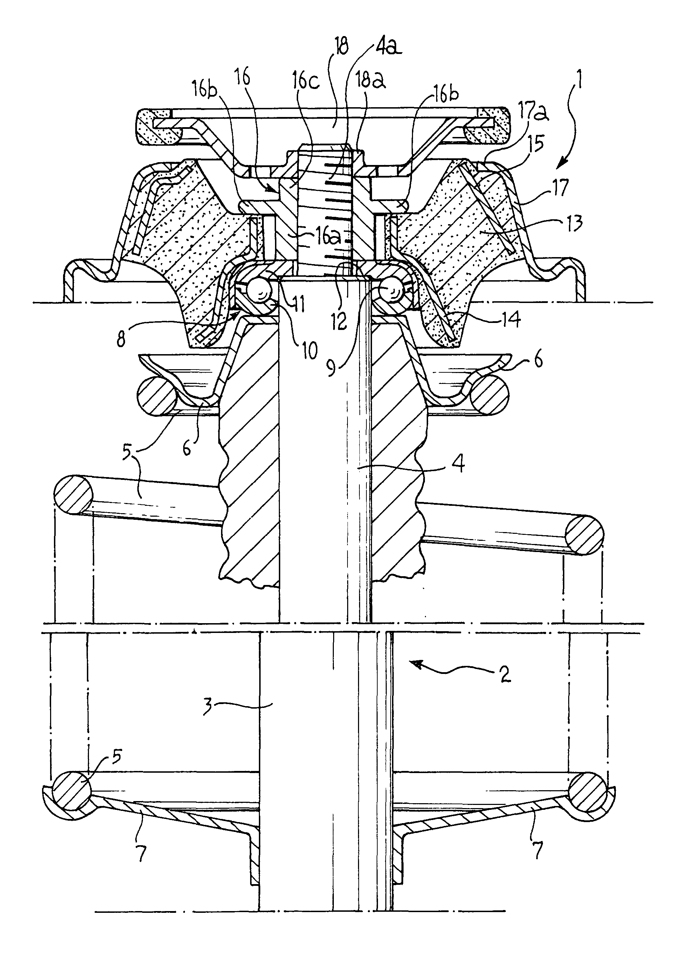

Further characteristics and advantages of the invention will be come apparent from the detailed description which follows, given purely by way of non-limitative example with reference to the appended drawing in which a device according to the invention is shown in partial section.

With reference to the drawing, a suspension device 1 comprises a shock absorber 2 with a cylinder 3 and a shaft 4 which projects from the top of the cylinder.

Around the shock absorber 2 is a helical spring 5 located between an upper plate 6 which surrounds the upper end of the shaft 4 and lower plate 7 fixed to the cylinder 3.

Above the upper plate 6 is a thrust bearing generally indicated 8. In known manner, this bearing includes a plurality of balls 9 enclosed between a lower ring 10 located around the shaft 4 and an upper ring 11 which bears on an upper shoulder 12 of the shaft 4. An annular buffer 13 of resilient material is located around the upper portion of the shaft 4 of the shock absorber, above the upper ring 11 of the thrust bearing 8. This buffer includes, in known manner, a rigid annular lower reinforcement 14 and a rigid upper reinforcement 15.

Reference 16 indicates an annular, internally threaded clamp member screwed on to an end spigot 4a of the shaft 4 of the shock absorber.

The clamp member 16 has a lower portion 16a which bears on the upper ring 11 of the thrust bearing 8, clamping it against the shoulder 12 of the shaft 4.

A middle portion of the clamp member 16 is formed with an annular projection 16b in the form of a collar which, in the clamped condition of this member, bears on the radially innermost portion of the buffer 13, clamping this buffer to the bearing 8.

The annular member 16 enables both the bearing and the buffer 13 to be clamped simultaneously to the shaft 4 of the shock absorber 2 during assembly.

Conveniently, as shown in the drawing, the clamp member 16 has an upper portion 16c in the form of a polygonal bolt head to facilitate its screwing onto the threaded spigot of the shaft 4 by means of a spanner or the like.

The suspension device described above is intended to be mounted in a domed receptacle 17 in the body of a motor vehicle. During assembly, the pre-assembled suspension device is introduced into the domed receptacle 17 from beneath so that the resilient buffer 13 engages this receptacle with form coupling. The suspension device is then fixed to the motor-vehicle body by means of a stop member 18 of essentially cup-shape, screwed on to the threaded spigot 4a of the shaft 4 which projects through the clamp member 16.

Conveniently the stop member 18 is constituted by a cup element of pressed and drawn sheet metal and has an annular, upwardly-turned edge 18a in its base wall, the inner surface of which is threaded for coupling with the spigot 4a of the shock-absorber shaft.

The stop member 18 extends radially beyond the edge of the upper aperture 18a in the domed receptacle 17 of the motor-vehicle body.

Naturally, the principle of the invention remaining the same, the forms of embodiment and details of construction may be varied widely with respect to that described and illustrated purely by way of non-limitative example, without thereby departing from the present invention, as as defined in the annexed Claims.

## Claims

1. A suspension device (1) for a motor vehicle, comprising
a shock absorber (2) with a cylinder (3) and a shaft (4) which projects from the top of the cylinder (3) and has a threaded upper spigot (4a),
a spring (9) located around the shock absorber(2) between an upper plate (6) which surrounds the upper end of the shaft (4) and a lower plate (7),
a thrust bearing (8) with a plurality of balls (9) between a lower ring (10) located around the shaft (4) above the upper plate (6) and an upper ring (11) which bears on an upper shoulder (12) of the shaft (4),
a threaded clamp member (16) screwed onto the spigot (4a) of the shaft (4) to clamp the upper ring (11) of the bearing (8) against the shoulder (12),
an annular buffer (13) of resilient material located around the shaft (4) above the upper ring (11) of the bearing (8) and including a rigid, annular, lower reinforcement (14) and a rigid upper reinforcement (15); the buffer (13) being intended to be introduced from beneath into a domed receptacle (17) of the motor-vehicle body having an upper aperture (17a); and
a stop member (18) for connection to the spigot (4a) of the shaft (4) over the clamp member (16) and over the domed receptacle (17) of the motor-vehicle body;
the suspension device being **characterised in that** the clamp member has an integral, radially-projecting formation (16b) which, in the clamped condition of the member (16), bears on the annular buffer (13) to fix it to the bearing (8), whereby the clamp member (16) enables both the bearing (8) and the resilient buffer (13) to be clamped simultaneously to the shaft (4) of the shock absorber (2).

2. A suspension device according to Claim 1, **characterised in that** the upper portion (16c) of the clamp member (16) is in the form of a polygonal bolt head.

3. A suspension device according to Claim 1 or Claim 2, **characterised in that** the stop member (18) comprises a cup-shaped member, the base of which is formed with a threaded aperture (18a) for screwing on to the spigot (4a) of the shaft (4) of the shock absorber (2).

4. A suspension device according to Claim 3, **characterised in that** the stop member (18) is of pressed sheet metal and has an upwardly-turned annular edge (18a) in its base, the inner surface of which is threaded for coupling with the spigot (4a) of the shaft (4) of the shock absorber (2).

## Patentansprüche

1. Aufhängevorrichtung (1) für ein Kraftfahrzeug, wobei die Aufhängevorrichtung enthält:
einen Stoßdämpfer (2) mit einem Zylinder (3) und einer Welle (4), die vom Oberteil des Zylinders (3) vorspringt und einen mit einem Gewinde versehenen oberen Zapfen (4a) besitzt,
eine Feder (9), die rund um den Stoßdämpfer (2) zwischen einer oberen Platte (6), die das obere Ende der Welle (4) umgibt, und einer unteren Platte (7) angeordnet ist,
ein Axiallager (8), das eine Vielzahl von Kugeln (9) zwischen einem unteren Ring (10), der rund um die Welle (4) über der oberen Platte (6) angeordnet ist, und einem oberen Ring (11) aufweist, der auf einer oberen Schulter (12) der Welle (4) aufliegt,
ein mit einem Gewinde versehenes Einspannelement (16), das auf den Zapfen (4a) der Welle (4) geschraubt wird, um den oberen Ring (11) des Lagers (8) gegen die Schulter (12) einzuspannen,
ein ringförmiges Dämpfungselement (13) aus einem elastischen Werkstoff, das rund um die Welle (4) über dem oberen Ring (11) des Lagers (8) angeordnet ist und eine steife, ringförmige untere Verstärkung (14) sowie eine steife obere Verstärkung (15) aufweist; wobei das Dämpfungselement (13) dazu vorgesehen ist, um von unten in eine kuppelförmige Aufnahme (17) der Karosserie des Kraftfahrzeugs eingesetzt zu werden, die eine obere Öffnung (17a) besitzt; und
ein Befestigungselement (18) für eine Verbindung mit dem Zapfen (4a) der Welle (4) über dem Einspannelement (16) und über der kuppelförmigen Aufnahme (17) der Karosserie des Kraftfahrzeugs;
wobei die Aufhängevorrichtung **dadurch gekennzeichnet ist, dass** das Einspannelement eine gemeinsam aufgebaute, radial vorspringende Ausbildung (16b) besitzt, die dann, wenn das Element (16) eingespannt ist, auf dem ringförmigen Dämpfungselement (13) aufliegt, um dieses am Lager (8) zu befestigen, wodurch das Einspannelement (16) sowohl das Lager (8) als auch das elastische Dämpfungselement (13) gleichzeitig an der Welle (4) des Stoßdämpfers (2) einspannen kann.

2. Aufhängevorrichtung gemäß Anspruch 1, **dadurch gekennzeichnet, dass** der obere Teil (16c) des Einspannelements (16) die Form eines polygonalen Schraubenkopfs besitzt.

3. Aufhängevorrichtung gemäß Anspruch 1 oder Anspruch 2, **dadurch gekennzeichnet, dass** das Befestigungselement (18) ein schalenförmiges Element enthält, dessen Basis mit einer Gewindeöffnung (18a) ausgestattet ist, um es auf den Zapfen (4a) der Welle (4) des Stoßdämpfers (2) zu schrauben.

4. Aufhängevorrichtung gemäß Anspruch 3, **dadurch gekennzeichnet, dass** das Befestigungselement (18) aus einem gepressten Blechwerkstoff besteht und an seiner Basis einen ringförmigen, nach oben gedrehten Rand (18a) besitzt, dessen Innenfläche mit einem Gewinde versehen ist, um eine Verbindung mit dem Zapfen (4a) der Welle (4) des Stoßdämpfers (2) herzustellen.

## Revendications

1. Dispositif de suspension (1) pour véhicule automobile comprenant:
un amortisseur (2) avec un cylindre (3) et un arbre (4) descendant depuis le sommet du cylindre (3) et ayant un tourillon fileté (4a) à sa partie supérieure
un ressort (9) disposé autour de l'amortisseur (2) entre une plaque supérieure (6) entourant la partie supérieure de l'arbre (4) et une plaque inférieure (7)
un palier de butée (8) avec un certain nombre de billes (9) entre une bague inférieure (10) disposée autour de l'arbre (4) au dessus de la plaque supérieure (6) et une bague supérieure (11) s'appuyant sur un épaulement supérieur (12) de l'arbre (4)
un élément de blocage (16) fileté autour du tourillon fileté (4a) de l'arbre (4) pour maintenir en position la bague supérieure (11) du palier (8) contre l'épaulement (12)
un tampon annulaire (13) en matière élastique disposé autour de l'arbre (4), au dessus de la bague supérieure (11) du palier (8) et comprenant un renfort inférieur, rigide, annulaire (14) et un renfort supérieur rigide (15); le tampon (13) devant être introduit par le dessous dans un élément de réception en forme de coupole (17) du châssis du moteur du véhicule présentant une ouverture supérieure (17a); et
un élément d'arrêt (18) en contact avec le tourillon fileté (4a) de l'arbre (4) au dessus de l'élément de blocage (16) et au dessus de l'élément de réception en forme de coupole (17) du châssis du moteur du véhicule ;
le dispositif de suspension étant **caractérisé en ce que** l'élément d'arrêt comporte une partie en excroissance radiale sur sa totalité (16b) qui s'appuie, en position serrée de l'élément de blocage (16), sur le tampon annulaire (13) pour le fixer sur le palier (8), l'élément de blocage (16) permettant de bloquer simultanément le palier (8) et le tampon élastique (13) contre l'arbre (4) de l'amortisseur (2),

2. Dispositif de suspension selon la revendication 1, **caractérisé en ce que** la partie supérieure (16c) de l'élément de blocage (16) a une forme de tête de vis polygonale.

3. Dispositif de suspension selon la revendication 1 ou 2, **caractérisé en ce que** l'élément d'arrêt (18) comprend un élément en forme de cuvette dont la base comprend une ouverture filetée (18a) à fixer sur le tourillon fileté (4a) de l'arbre (4) de l'amortisseur (2).

4. Dispositif de suspension selon la revendication 3, **caractérisé en ce que** l'élément d'arrêt (18) est en tôle emboutie et, dans sa base, présente un bord annulaire (18a) tourné vers l'extérieur, et dont la face intérieure est filetée pour être vissée sur le tourillon (4a) de l'arbre (4) de l'amortisseur (2).
